# EUROPEAN PATENT APPLICATION

(11) **EP 1 870 847 A2**
(43) Date of publication of application: **26.12.2007**
(21) Application number: 07110634.8
(22) Date of filing: 20.06.2007
(51) Int. Cl.: G06Q 10/00

(54) **Automated repair analysis using a bundled rule-based system**

(30) Priority: 20.06.2006 US 425277
(71) Applicant: Xerox Corporation, Rochester, New York 14644 (US)
(72) Inventor: Thieret, Tracy Eugene, Webster, NY 14580 (US); Rockwell, Ronald Moore, Rochester, NY 14607 (US)
(74) Representative: Grünecker, Kinkeldey, Stockmair & Schwanhäusser Anwaltssozietät

(57) **Abstract**

A method for diagnosing a device malfunction includes receiving a request for repair from an electromechanical device, wherein the request includes identification of the malfunctioning device, data related to the configuration and state of the device, information on the level of access to the device, and a description of the device malfunction. A repair analysis procedure may be automatically selected based on the information received, and at least one automated test may be executed. The repair analysis procedure may be represented by a diagnostics tree having a plurality of nodes, where each node may include different numbers of tests. The tests may include the download of software to the device. Results from the test or tests may be used to move through the diagnostics tree and modify or update the repair analysis procedure. An instruction to resolve the malfunction may then be deployed to the device.

## Description

### F. BACKGROUND

### 1. Technical Field

The disclosure contained herein generally relates to a system and method for the automated diagnosis and repair of a networked electronic device.

### 2. Description of Related Art

Diagnosis and repair of complex electromechanical devices requires sophisticated techniques and highly trained service engineers. Additionally, the current service process for diagnosis and repair of these electromechanical devices involves potential significant device downtime, a situation that leads to reduced productivity. A customer places a call to the service provider requesting a customer service engineer for on-site repair of a device. The customer then waits for the customer service engineer to arrive, all the while experiencing downtime of the device and an interruption of the associated workflow. Once dispatched to a customer site, the engineer may use a defined repair analysis procedure which may be implemented on paper, on microfiche, on the web (accessed by a web browser), or on a portable display or computing device that the service engineer carries. The repair analysis procedure may be computationally coded in a variety of different ways, including a directed graph (usually binary) with diagnostic tests at each node. These appear as an electronically presented sequence of steps that the service engineer executes as prompted by the computer or device on which the sequence of diagnostic steps is displayed. Each step or test may consist of a request for information, a diagnostic routine or an electrical or visual check on the device. The service engineer is directed to one of two "child" nodes on the diagnostic tree depending on the outcome of the tests. The process is repeated for the next node until a conclusion is reached. This process is time consuming, and frequently this highly trained service engineer has been called to repair a minor issue with the device that could have been handled by the customer. The current process is therefore expensive for both the customer and the service provider.

Accordingly, what is needed is a system and method to improve the diagnosis and repair of these complex electromechanical devices. More specifically, what is needed is a system and method of diagnosis that is more time efficient and requires less human intervention.

The disclosure contained herein describes solutions to one or more of the problems described above.

### SUMMARY

An embodiment of the present disclosure includes a method for diagnosing a device malfunction. The method may include receiving a request for electromechanical device repair assistance. The request for repair assistance includes identification of the malfunctioning device, data relating to the configuration or state of the device, information on the level of available access to the device, and a description of the device malfunction. Automatic selection of a repair analysis procedure may then be carried out based on the device identification, configuration or state, level of access, and the reason for the malfunction. Additionally, a database of device data may be accessed to obtain malfunction or repair data for other devices that are similar to the malfunctioning device. Data obtained from this database may be used to update or modify the previously selected repair analysis procedure.

The repair analysis procedure may contain at least one automated test that can be performed on the device via a communications port without any human intervention. The automated test may comprise a non-invasive test that does not require shutdown of the device. An instruction to perform the automated test may then be communicated to the device. A result from the automated test may then be sent back from the device which allows the repair analysis procedure to be modified or updated. An instruction which may resolve the malfunction is then deployed to the device.

The repair analysis procedure may be represented by a diagnostics tree having a single node or a plurality of nodes, where each node may include different numbers of tests. The tests may include the download of diagnostic software to the device. The diagnostic software may contain instructions to gather data over a period of time and restart the diagnostic session when a malfunction event is detected. Results from the test or tests are used to move through the diagnostics tree and modify or update the repair analysis procedure. The repair analysis procedure described herein may be tailored to the specific device or device type by accessing a database of data saved from previous device repair sessions.

Modifying the repair analysis procedure may comprise removing nodes that are not necessary based on results from the automated test. Updating the repair analysis procedure may involve an upgrade based on a history, usage pattern, or environmental condition of the device. This upgraded procedure may also be stored in the database for future reference.

Depending on the data received about the level of access to the malfunctioning electromechanical device, the automated test or tests of the selected repair analysis procedure may also comprise non-invasive tests that require shutdown of the device. Further, the automated test or tests of the selected repair analysis procedure may also comprise potentially hazardous tests that may require shutdown of the device and notification of users working in the area of the device. The automated test or tests of the selected repair analysis procedure may also comprise human-implemented tests. In one embodiment of the method of claim 1, the method further comprises upgrading the selected repair analysis procedure based on a history, usage pattern, or environmental condition of the device.
In a further embodiment the method further comprises saving the upgraded repair analysis procedure to a memory.
In a further embodiment the request also includes data relating to a configuration and state of the device.
In a further embodiment the automatically selecting a repair analysis procedure is also based on the configuration or state data of the device.
In one embodiment of the method of claim 10, the method also comprises, before the deploying:
selecting from the repair analysis procedure at least one potentially hazardous automated test that can be performed on the device via a communications port and which requires removing the device from service;
communicating an instruction to perform the automated diagnostic test to the device when the device has been removed from service;
receiving a result from the automated diagnostic test; and
modifying the repair analysis procedure based on the result from the automated diagnostic test.
In a further embodiment the method also comprises, before the deploying:
selecting from the repair analysis procedure at least one human-implemented test to be performed on the device by human action;
communicating an instruction to perform the human-implemented test;
receiving a result from the human-implemented test; and
modifying the repair analysis procedure based on the result from the human-implemented test.
In a further embodiment at least one of the acts of communicating an instruction comprises transmitting diagnostic software to the device.
In a further embodiment the diagnostic software contains instructions to gather data over a period of time and restart a diagnostic session when a malfunction event is detected.
In a further embodiment:
the repair analysis procedure may be represented by a diagnostic tree having a plurality of nodes;
the selecting comprises selecting one of the nodes; and
the selecting, communicating and receiving are performed a plurality of times.
In a further embodiment the modifying comprises removing nodes that are not necessary based on results from the automated tests.

### BRIEF DESCRIPTION OF THE SEVERAL VIEWS OF THE DRAWINGS

Aspects, features, benefits and advantages of the embodiments described herein will be apparent with regard to the following description, appended claims and accompanying drawings where:

**FIG. 1** depicts a high level system diagram according to an embodiment.

**FIG. 2** depicts an exemplary flow diagram for a process of automatically diagnosing and repairing an electromechanical device.

**FIG. 3** depicts an exemplary flow diagram for a process of automatically running a repair analysis procedure on an electromechanical device.

**FIG. 4** depicts an exemplary flow diagram for the process of determining the level of access to an electromechanical device.

### DETAILED DESCRIPTION

Before the present methods, systems and materials are described, it is to be understood that this disclosure is not limited to the particular systems, methodologies or protocols described, as these may vary. It is also to be understood that the terminology used herein is for the purpose of describing particular embodiments only, and is not intended to limit the scope of the present disclosure which will be limited only by the appended claims. It must be noted that as used herein and in the appended claims, the singular forms "a," "an," and "the" include plural reference unless the context clearly dictates otherwise. In addition, the word "comprising" as used herein means "including, but not limited to". Unless defined otherwise, all technical and scientific terms used herein have the same meanings as commonly understood by one of ordinary skill in the art.

While the term "user" will be used in the disclosure below, "user" will include reference to any person or persons, such as office managers, office employees, solo business owners, customers, home owners, and the like, all of which may be used interchangeably and is to represent any individual with a device. The use of the term "device", "marking device", "machine" and "equipment" will be used interchangeably and is to encompass any electromechanical device or system capable of being included on a computer network. Such "devices" may include, but are not limited to printers, scanners, fax machines, multifunctional devices, network routers, network switches, network computational devices including servers and workstations, network file systems and the like, household appliances such as heating and cooling systems, refrigerators, washing and drying machines, and the like. "Document production" describes, for example, printed documents/papers, scanned documents/papers, faxed documents/papers, and the like. While the term "deploy" will be used in the disclosure below, "deploy" will be taken to indicate that a procedure is displayed, installed, set-up, tested, run, distributed, or implemented on a device or network. "Deploying an instruction" may describe, for example, sending a command to a device to fix a problem or to continue operating in a degraded mode until a service engineer can repair the problem. "Deploying an instruction" may further describe notifying a service engineer of the nature of a problem, or of the diagnostic tests already performed, or the parts or procedures required to fix the problem.

This disclosure is generally related to providing an automated or partially automated system and method for the remote or partially remote diagnosis and repair of any electromechanical device which is on a computer network or is capable of being added to a computer network. The procedure, which may be executed by a customer service engineer at the customer site and/or a remote system, provides remote computational implementation in an automated diagnostics tree.

A "diagnostics tree" is a mechanism that guides the troubleshooter, in the current disclosure the diagnostics server, or the diagnostics server in concert with the customer device, through a series of steps which efficiently and correctly identify a malfunction in one or more devices. Creating a diagnostic tree may require not only a thorough understanding of the system involved but also an understanding of how to efficiently search for a problem. In some embodiments, the selection of a diagnostics tree also may depend on customer repair permissions. In the embodiments disclosed herein, a rule-engine evaluates specific rules found in a diagnostics tree, and it makes decisions as to whether to perform actions or provide responses based on the outcome of the rules evaluation.

A "tree" is a graph in which any two points are connected by exactly one path, and is a widely-used computer data structure that emulates a tree structure with sets of linked nodes. "Nodes" are similar to the branches of a tree, and may have zero or more child nodes. A node that has a child is called the child's parent node. A child has at most one parent; a node without a parent is called the root node (or root). Nodes with no children are called leaf nodes. Stepping through the items of a tree, by means of the connections between parents and children, is called "walking" the tree.

An automated procedure may identify the test or tests that the automated system can or should perform first in order to prune the symptom/solution tree. A large number of simple tests can be performed initially in a non-invasive manner. In this disclosure "non-invasive" means that the device's performance is not adversely affected by the process or activity. This allows the automated system to prune the diagnostic tree quickly. Varying levels of diagnostic access permit varying levels of diagnostic optimization of the tree.

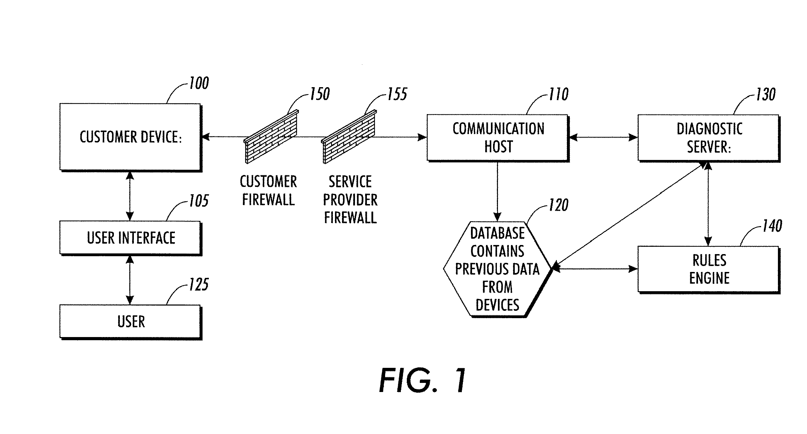

FIG. 1 depicts a high level system diagram of an exemplary rules analysis system. In this diagram, a device **100** initiates a conversation with a communication host **110** in response to either an internally detected condition or a human (customer or customer service engineer) initiated session. The device **100** may be a printer, copier, scanner, fax machine, multifunctional device, home appliance, or any other electromechanical device that is connected to a communications network and which has electrical or mechanical parts that may require repair. The device **100** may have a communicating part to permit outgoing and incoming data transmissions. It may also include or be connected to a user interface **105** that allows a user **125** to directly input or receive data for the device. The communication host **110** gathers data from the customer device **100** and converts that information into correct semantic form, inserting the information into a database **120** which may contain historic device data.

The communications host **110** is responsible for receiving network communications and providing consistent semantics across device types and device applications. Different manufacturers and even different devices from the same manufacturer may contain data that are labeled similarly but have different meanings (semantics). For example, one device may describe units in the metric system while another uses English units. In order to properly interpret the data that are coming back from the customer devices **100,** these discrepancies in definition may be resolved by the communications host **110.** The resolution process may require some kind of conversion (as in between Centigrade and Fahrenheit or meters and inches). There are many other such examples. An exemplary communications host of a preferred embodiment is described in U.S. Patent Application 2004/0111315 A1 entitled "Device Model Agent" published on June 10^{th}, 2004, the disclosure of which is incorporated herein by reference in its entirety.

After the information collected from the customer device **100** is placed into correct semantic form by the communications host **110,** a connection to the diagnostics server **130** may be established. An exemplary diagnostics server is described in U.S. Patent 5,923,834 entitled "Machine dedicated monitor, predictor, and diagnostics server", the disclosure of which is incorporated herein by reference in its entirety. Additionally, a suitable example of a system and method for communication between electronic devices in a distributed network is described in U.S. Patent 6,892,317 entitled "Systems and methods for failure prediction, diagnosis and remediation using data acquisition and feedback for a distributed electronic system", the disclosure of which is incorporated herein by reference in its entirety.

The communication host **110** and diagnostics server **130** may be local to the customer site or remote from the customer site. In the case of a remote location, as depicted in FIG. 1, communications between a customer device **100** and the communication host **110** may cross a customer firewall **150** as well as a service provider firewall **155.** In this case, communication would need to be initiated or permitted by the customer device 100 in order to bypass restrictions imposed by the customer's firewall on communication.

The diagnostics server **130** contains instructions which may be used to decide which procedure will be executed based on the data collected by the communication host **110** from the customer device **100.** This data may include device identification number and device type, data relating to the configuration and state of the device, past device performance or behavior, information about the type of account and access to the device allowed by the customer, and or the amount of time since the last service request. The diagnostics server **130** may request additional data or the execution of tests during the process of walking the procedure, and may receive data and or results. This server **130** may then analyze the results of the test, evaluate the data, and iterate to the next node in the graph using the rules engine **140.** It is this rules engine **140** that implements the procedure which allows for automated assessment and transmission of data to provide for accurate and timely diagnosis and repair. The rules engine **140** resides on the diagnostics server **130** and performs the walking of the diagnostics tree of the repair analysis procedure.

The rules engine **140** contains various forms of the diagnostic tree and decides which one is appropriate for use in a specific situation based on information such as the level of allowable access to a device. An exemplary rules engine has been described in the U.S. Patent Application 11/381,193 filed on May 1st, 2006 entitled "Rule engines and methods of using same", the disclosure of which is incorporated herein by reference in its entirety.

The rules engine **140** depicted in FIG. 1 evaluates whether the tests in that node can be carried out, and if so, makes the programmed requests then continues. It walks the situation dependent appropriate diagnostic tree. If the tests in a node cannot be carried out, the rules engine **140** will stop the procedure, collect the data, and place it into the appropriate form for viewing by a human recipient. The diagnostics server **130** then sends the data to the appropriate recipients and the automated session is terminated. The diagnostic session may persist, however, as the device problem may not yet been solved. The repair analysis procedure may not conclude until the machine is returned to full functionality.

The information received from the device during the "walking" of a procedure may also be used to reformulate the current procedure or to select another more appropriate procedure. This information may be obtained remotely by requests sent to the device **100** from the diagnostics server **130** via the communications host **110.** Alternatively, after the initial communication from a customer device **100** is received by the communications host **110** and passed to the diagnostics server **130,** the communication during a session may persist directly between the customer device **100** and the diagnostics server **130.** Information, in this later case, may be obtained remotely by requests sent to the device **100** directly from the diagnostics server **130.** The information request may also originate from a customer service engineer who may be located at the service provider site or the customer device site.

The information gathered from the customer device **100** may be either from the communications data transmission part of the device which is automatically generated or may be generated by a human user **125** communicating with the device **100** via a user interface **105.** In this latter example, the willing human **125** (user or customer service engineer) at the customer device **100** may be asked to perform specific tasks, such as opening a device door or evaluating the device output. The information gathered from such an activity may be sent back to the service provider's communication host **110** and the diagnostics server **130,** or directly to the diagnostics server **130,** where the procedure currently being "walked" may be updated or reformulated.

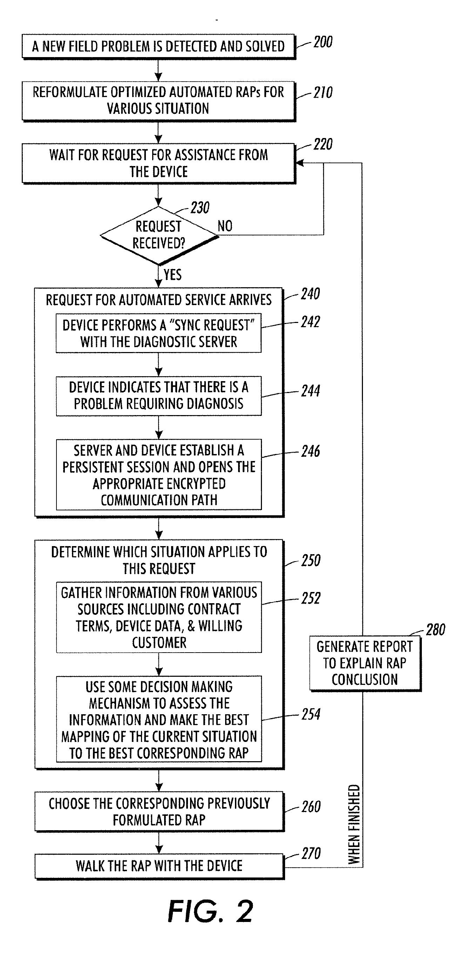

An exemplary flow of information is depicted in flowchart form in FIG. 2, with reference to FIG. 1. The diagnostics server and automated procedures of the present disclosure may gather information from a device or several devices from the service requests, and store this data at a central database **120,** as depicted in block **200** of the flowchart. This large database of information from past service requests also includes information gathered during the diagnosis and repair of the device, and may be used to reformulate and update the procedures as depicted in block **210** of the flowchart. This large database of information also provides a scalable increase in the knowledge base for diagnosis and repair of electromechanical devices. This data may be used for a global analysis of device behavior which may detect complex patterns in the large data sets. These patterns may be used to further refine the automated procedures and make them more specific to device types and even to individual devices

At block **220** of the flowchart depicted in FIG. 2, the diagnostics server **130** may wait to receive a request for assistance from a remote device **100.** The server may be constantly checking for signals from remote devices, as depicted in block **220,** and upon receipt of such a signal at block **230** may proceed down the flowchart to block **240.** The request for automated service at block **240** may require that the customer device perform a synchronization request with the diagnostics server, as depicted by step **242,** allowing for identification of the device by the device identification number and device type. At step **244,** the device may then indicate that there is a problem requiring diagnosis. The server and remote customer device may then establish a persistent network session at step **246,** allowing for the open bi-directional flow of information across the distributed network. This may involve the evaluation of security signatures that allow access across customer **150** and service provider firewalls **155.**

The diagnostics server may use the information gathered in block **250** to determine which procedure to perform on the customer device. Information on the level of access to the remove device may be determined in step **252.** Information on the level of access may come from a database of contract terms and conditions and also from evaluation of the customer's willingness to monitor and assist in the diagnosis. A customer standing near the device **100** may also be able to certify that the device doors or covers are closed so that invasive tests which may be hazardous may be part of the repair analysis procedure. A decision may be made in step **254** which matches the current device request with the best procedure. The correct procedure may be chosen in block **260** and walked in block **270** of the flowchart depicted in FIG. 2. Upon completion of the procedure, the system may return to the ready state depicted in block **220.** Information gathered from this last service request may be stored in the database **120,** as shown in block **200.** The automated procedures may then be reformulated based on this updated information as depicted in block **210.**

The automated procedures of the present disclosure may further explain the reasoning that led to the conclusions drawn from walking the procedure, as depicted by the generation of a report at block **280** of FIG. 2. It may be vital that a diagnostic system be capable of explaining the reasoning behind a decision to interested parties, typically the customer. The rules engine **140** may explain the sequence of tests performed (steps in a procedure and/or procedures) using appropriate abstractions in response to queries from the user **125** or customer service engineer. Both for testing the system and for convincing the customer, the system may maintain a record of the tests performed and the order in which they were performed at the database **120.** This record may be accessed by the user **125** at the user interface **105,** or may be sent to the user by the service provider.

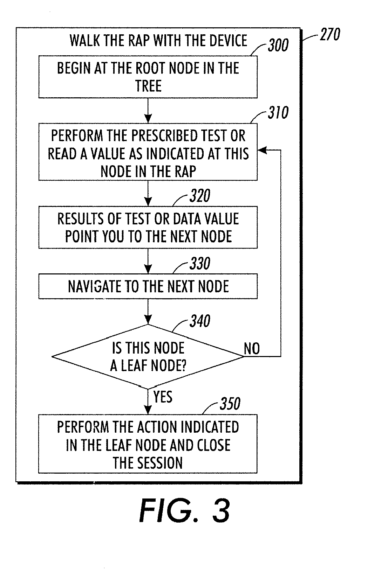

FIG. 3 depicts a flowchart which demonstrates exemplary steps that may be involved in walking the "tree" of a procedure. In this figure block **300** represents the starting point or the root of the tree. At each step or "node" a test is performed or a value is read as is indicated in block **310.** The results of that test or data value may direct the system to the next nodes **320** and **330** and **340.** At each step, the system looks to determine whether the node is a leaf node (terminal node) or not. If it is a leaf node, then the system may perform an action as indicated by the rules of that node and close the session as shown in block **350.** If it is not a leaf node the system may perform the test required and continue to walk the tree as depicted in block **310.**

In an embodiment of the present disclosure, the procedure may be upgraded rapidly by analysis of global data at the diagnostics server **130.** This may be done computationally, or may happen after human inspection. Upgrades may be deployed instantly or periodically from the diagnostic server **130.** As the number of detected field problems grows, the automated procedures can acknowledge these and test for them without having to perform a field-wide software upgrade to the customer service engineers portable workstation's device diagnostics software, or to the devices diagnostics software. These automated procedures may be managed from a central location by the service delivery provider, and may be deployed immediately or periodically to the field upon completion of verification testing.

In some embodiments of the present disclosure the procedure may respond to different specific situations. The previously transmitted data from the customer device **100** may be analyzed and an automated procedure may be generated at the diagnostics server **130** to cover only those tests that the previously generated procedure didn't address. Device history, usage patterns and environmental conditions are all used to adjust the structure and content of the automated procedure. For example, a customer device which is a marking device may be adversely affected by environmental conditions. Electrophotography is based on static electricity, thus humidity and temperature conditions may vary the performance of devices located in different regions of the world. The previously transmitted data from such devices may be used to include or exclude specific tests in the automated procedure that will be unique for even similar machines in different locations. Typically, these quantities are not part of the current non-automated procedures because they are static trees that exist on the customer service engineer's portable workstation. The automated procedures of the present disclosure represent a major improvement in diagnosis and repair, and may provide useful diagnostic information for the future generation of additional automated procedures.

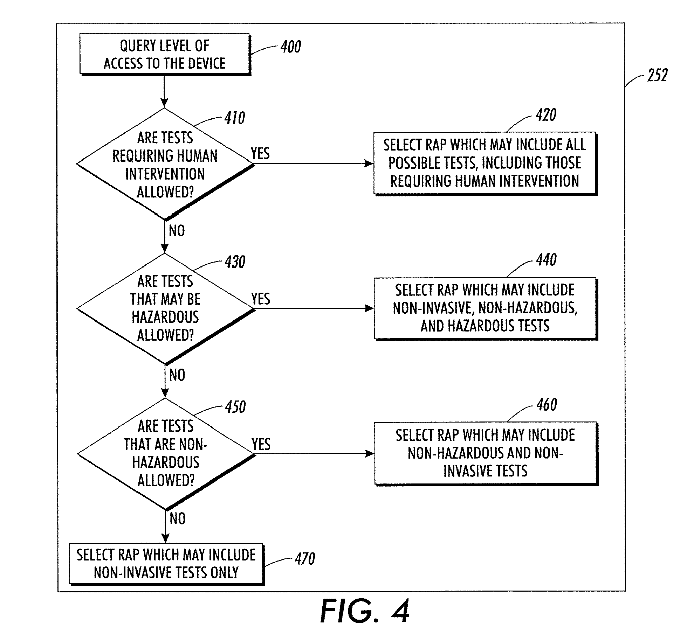

The level of available access to the data and internal test procedures, as illustrated in block **252** of FIG. 2, may modulate the structure and content of an automated procedure. Different levels of constrained optimization of the diagnostics tree are possible depending on the level of access to the device that the automated system may gain. An exemplary flow diagram for the process of determining the level of access to an electromechanical device is depicted in FIG. 4. Information gathered about the contract terms and conditions, and the presence of a willing customer, as represented in block **400,** may allow the diagnostics server **130** to determine which situation applies to the current service request from the customer device. If tests which may require human intervention are allowed, as determined in block **410,** then the procedure selected may permit optimization of the diagnostics graph, as depicted in block **420.** Tests requiring human involvement may include, for example on a marking device, the evaluation of prints, reviewing for mottles, streaks, and other image quality parameters, removal of prints from the output tray, or some other manual activity that can only be performed by a person on site. This person may be skilled or unskilled in repair procedures, as the requests for intervention may be worded in a manner that is self explanatory. This complete access to the remote device is the most flexible.

If tests involving human intervention are not allowed, the diagnostics server **130** may then query whether hazardous tests are allowed in block **430.** If hazardous tests are allowed, the server moves to block **440** and selects a procedure that allows for diagnostics which may require the device covers to be closed and their interlocks cheated, for example. Tests in this class may be potentially hazardous to personnel working on the device if executed while the covers are open. Sites where a human is monitoring the environment may perform these kinds of test and thus, when permitted, may enable more complete diagnostics and restructuring of the procedure diagnostics graph for maximal pruning of the diagnostics tree.

If tests which are hazardous are not allowed, the diagnostics server **130** may then query whether non-hazardous test are allowed in block **450** of FIG. 4. If non-hazardous tests are allowed, the server moves to block **460** and selects a procedure that allows for diagnostics which may include remote device operation and potentially device shutdown, but which pose no harm to users who may be working at or near the device.

If tests which are non-hazardous are not allowed, the diagnostics server **130** may select a procedure where only non-invasive tests are performed, as depicted in block **470.** Even at this reduced level of device access, different diagnostic trees may be used which account for various degrees of non-invasive access. For example, the customer may not allow software to be downloaded onto the device, but may allow the internal memory to be accessed. This level of procedure has available graph nodes which may allow data gathering only, and may be traversed in situations where the customer requires continuous device uptime.

In the embodiments disclosed herein, the rules engine **140** evaluates the specific rules for device access as may be defined in the terms and conditions of the service contract, or by customer or customer service engineer input, and makes decisions as to what level of repair analysis procedure to carry out. A lot of diagnostics may be performed to limit the possible scope of the problem just using live information. "Live information" refers to information collected from the device while it is being operated by the customer at the customer site, often without the customer even noticing.

The automated procedure of the present disclosure may also include different numbers of tests at each node. The tests may be single requests that answer several questions at a low level of abstraction. A node in the graph may also consist of a bundled set of rule based tests that answer questions at a higher level of abstraction. It should be noted that these bundled rules are things that can readily be detected and evaluated by a computational rules engine, but would be awkward for a human agent, requiring calculations or skilled interpretation.

The automated procedures of the present disclosure may further involve download of specific diagnostic software not in the list of existing diagnostic control routines of the devices internal code. As new problems are discovered in the field and solutions identified, as depicted in block 200 of the flowchart in FIG. 2, the internal machine code may not keep pace with the frequency of solved problems. Newly discovered problems may be analyzed using software downloaded to the specific device being analyzed, as depicted in block **270** of FIG. 2, where downloading the new software to the device is part of the procedure. The procedure may then further include allowing the software to persist on the customer device or be deleted upon completion of the tests. This later action may protect code from reverse engineering by competitive service entities.

The automated procedures of the present disclosure may also require additional data collection and abstraction with resumption of the diagnosis session at a later time, as is depicted in block **250** of the flowchart in FIG. 2. Traditionally, intermittent device problems are the hardest to diagnose. The detection process typically involves streaming data into a circular buffer until the problem is detected. The data in the buffer are frozen at that point for analysis. Embodiments of the present disclosure may access the data from the circular buffer that contains information from prior to the device failure or intermittent problem. A procedure may then by applied, as shown in block **270** of FIG. 2, that automatically analyzes the data from the circular buffer. This may include the use of downloaded software or resident routines to detect the occurrence of the anomaly. The data is analyzed and the diagnostic session may be autonomously restarted using the newly obtained pre-failure information. The traversal of the automated procedure would then resume where it previously finished, or a new procedure may be selected or reformulated that applies specifically to the device failure diagnosed by the data collected from the circular buffer.

Embodiments described herein may replace the current procedure with an automated procedure that is executed computationally by remote servers operating in concert with the customer device. Further, embodiments of the procedure described herein may be tailored to the specific device. In some embodiments, this procedure may be refreshed at a diagnostics server based on data obtained from the customer device, and tests are run that may be designed specifically for that device and that may be performed remotely. A deeper level of automated diagnosis also may be available given the presence of a willing human at the device location in certain embodiments.

The present disclosure also provides a scalable increase in the knowledge base for diagnosis and repair of electromechanical devices. Historically, customer service engineers gathered only the information necessary to diagnose and repair a device at the customer site. The diagnostics server and automated procedures of the present disclosure may collect data from devices, and store this data at a central database and diagnostics server. This data may be used for a global analysis of device behavior which may detect complex patterns in the large data sets. These patterns may be used to further refine the automated procedures and make them more specific to device types and even to individual devices.

The Examples below are merely representative of the work that contributes to the teaching in the present disclosure and are not considered to be restrictive of the disclosure.

### EXAMPLES

### Example 1 - Bundled rule set for the photoreceptor.

An example of a procedure for a xerographic device may include a bundled rule set which asks the question "Photoreceptor electronically dead?" In this case, the node in the tree may include tests of the photoreceptors current life in cycles, its time dependent response to light (photon induced discharge curves), and electrical and or mechanical efficiency. This may require a variety of tests for various parts of the device. Once completed, however, the procedure will alert the customer service engineer as to whether a part needs to be replaced, and which part may need to be replaced. This allows the engineer to dispatch to a customer site with the correct equipment, if necessary, and it may also allow for less trained individuals, such as the customer, to replace the part.

### Example 2 - Bundled rule set for the toner auger.

Another example of a bundled rule set for a xerographic device may ask the question "Toner Auger Bound?" In this case the node may include tests relating to the number of requests for toner dispense, the recent area coverage printed, and the current toner concentration.

### Example 3 - Bundled rule set for the solenoid.

Another example of a bundled rule set for a xerographic device may ask the question "Solenoid 7D failed?" This node may contain tests that may include histograms of media arrival times, lifetime data, and signature analysis of the part.

## Claims

1. A method of diagnosing a device malfunction, comprising:
receiving a request for electromechanical device repair assistance, wherein the request includes an identification of a malfunctioning device and a description of a device malfunction;
automatically selecting a repair analysis procedure based on the identification and the reason;
selecting from the repair analysis procedure at least one automated test that can be performed on the device via a communications port without human intervention;
communicating, to the device, an instruction to perform the automated test;
receiving a result from the automated test;
modifying the repair analysis procedure based on the result; and
deploying an instruction to resolve the malfunction.

2. The method of claim 1, further comprising:
accessing a database of device data to obtain malfunction or repair data for other devices that are similar to the malfunctioning device; and
at some point after the automatically selecting and before the deploying, updating the repair analysis procedure based on the accessed malfunction or repair data.

3. The method of claim 1, wherein the automated test comprises a non-invasive test that does not require shutdown of the device, and wherein the method also comprises before the deploying:
selecting from the repair analysis procedure at least one automated diagnostic test that can be performed on the device via a communications port and which requires shutdown of the device;
communicating an instruction to perform the automated diagnostic test to the device;
receiving a result from the automated diagnostic test; and
modifying the repair analysis procedure based on the result from the automated diagnostic test.

4. The method of claim 3, wherein the method also comprises, before the deploying:
selecting from the repair analysis procedure at least one potentially hazardous automated test that can be performed on the device via a communications port and which requires removing the device from service;
communicating an instruction to perform the automated diagnostic test to the device when the device has been removed from service;
receiving a result from the automated diagnostic test; and
modifying the repair analysis procedure based on the result from the automated diagnostic test.

5. The method of claim 3, wherein the method also comprises, before the deploying
selecting from the repair analysis procedure at least one human-implemented test to be performed on the device by human action;
communicating an instruction to perform the human-implemented test;
receiving a result from the human-implemented test; and
modifying the repair analysis procedure based on the result from the human-implemented test.

6. The method of claim 4, wherein at least one of the acts of communicating an instruction comprises transmitting diagnostic software to the device.

7. The method of claim 1, wherein the diagnostic software contains instructions to gather data over a period of time and restart a diagnostic session when a malfunction event is detected.

8. The method of claim 1, wherein:
the repair analysis procedure may be represented by a diagnostic tree having a plurality of nodes;
the selecting comprises selecting one of the nodes; and
the selecting, communicating and receiving are performed a plurality of times.

9. The method of claim 8, wherein the modifying comprises removing nodes that are not necessary based on results from the automated tests.

10. A method of diagnosing a device malfunction, comprising:
receiving a request for electromechanical device repair assistance, wherein the request includes an identification of a malfunctioning device and a description of a device malfunction;
accessing a database of device data to obtain malfunction or repair data for other devices that are similar to the malfunctioning device;
automatically selecting a repair analysis procedure based on the identification and the reason;
updating the repair analysis procedure based on the accessed malfunction or repair data;
selecting from the repair analysis procedure at least one non-invasive automated test that can be performed on the device via a communications port without human intervention and that does not require shutdown of the device;
communicating, to the device, an instruction to perform the automated test;
receiving a result from the automated test;
modifying the repair analysis procedure based on the result; and
deploying an instruction to resolve the malfunction.
